# EUROPEAN PATENT APPLICATION

(11) **EP 4 328 274 A1**
(43) Date of publication of application: **28.02.2024**
(21) Application number: 22807271.6
(22) Date of filing: 30.03.2022
(51) Int. Cl.: C09D 5/14, C09D 5/16, C09D 133/14

(54) **ANTIFOULING COATING COMPOSITION**

(30) Priority: 14.05.2021 JP 2021082744
(71) Applicant: Nitto Kasei Co., Ltd., Osaka-shi Osaka 533-0031 (JP)
(72) Inventor: KITAMURA, Hitoshi, Osaka-shi, Osaka 533-0031 (JP); OKA, Nagato, Osaka-shi, Osaka 533-0031 (JP); WAKU, Hidenori, Osaka-shi, Osaka 533-0031 (JP); MATSUKI, Takashi, Osaka-shi, Osaka 533-0031 (JP); YASUI, Takuya, Osaka-shi, Osaka 533-0031 (JP)
(74) Representative: Gulde & Partner
(86) International application number: PCT/JP2022/016330
(87) International publication number: WO 2022/239567

(57) **Abstract**

The present invention provides an antifouling coating composition capable of maintaining a stable coating film dissolution rate in seawater over a long period of time, and capable of maintaining stable antifouling performance without causing coating film defects such as cracks.

According to the present invention, there is provided an antifouling coating composition comprising a copolymer A, a polymer B, and an antifouling agent D, wherein the copolymer A is a copolymer of a monomer (a) represented by general formula (1) and an ethylenically unsaturated monomer (b) other than the monomer (a), the monomer (a) comprises a compound represented by the general formula (1) in which n is 2 or more, the monomer (b) comprises a monomer (b 1), and the monomer (b 1) is capable of forming a homopolymer having a glass transition temperature (Tg) of -20°C or higher and has a common logarithm log P of a n-octanol/water partition coefficient P of 0.9 or less.

## Description

### Technical Field

The present invention relates to an antifouling coating composition.

### Background Art

Aquatic fouling organisms such as barnacles, tubeworms, common mussels, *Bugula neritina,* sea squirts, green laver, sea lettuce, and slimes adhere to ships (especially, on the bottom of ships), fishing tools such as fishing nets and fishing net accessories, and underwater structures such as power plant aqueducts, thereby causing problems such as impaired functionality and appearance of the ships and the like.

In order to prevent such problems, there are known techniques in which an antifouling coating composition is applied onto a ship or the like to form an antifouling coating film such that an antifouling agent is gradually released from the antifouling coating film, which allows antifouling performance to be exhibited over a long period of time (Patent Literatures 1 to 4).

However, the antifouling coating films comprising (meth)acrylic acid alkoxycarbonylmethyl ester group-containing polymer disclosed in Patent Literatures 1 to 4 are difficult to exhibit antifouling property over a long period of time due to its extremely low coating film dissolubility. In order to solve these problems, there has been proposed a technique for dissolving and allowing the coating film to exhibit antifouling performance over a long period of time (Patent Literature 5).

### Citation List

### Patent Literature

[Patent Literature 1] JP-B-S63-61989
[Patent Literature 2] JP-A-2003-119420
[Patent Literature 3] JP-A-2003-119419
[Patent Literature 4] JP-A-2002-3776
[Patent Literature 5] WO2020/045211

### Summary of Invention

### Technical Problem

Although the antifouling coating film comprising the antifouling coating composition disclosed in Patent Literature 5 has improved coating film dissolubility and the like, when a long period of time has elapsed after immersion in seawater, the coating film dissolution may become excessively large or coating film defects such as cracks may occur, so there is a need for further improvement.

The present invention has been made in view of such circumstances, and provides an antifouling coating composition capable of maintaining a stable coating film dissolution rate in seawater over a long period of time, and capable of maintaining stable antifouling performance without causing coating film defects such as cracks.

### Solution to Problem

According to the present invention, there is provided an antifouling coating composition comprising a copolymer A, a polymer B, and an antifouling agent D, wherein the copolymer A is a copolymer of a monomer (a) represented by general formula (1) and an ethylenically unsaturated monomer (b) other than the monomer (a), the monomer (a) comprises a compound represented by the general formula (1) in which n is 2 or more, the monomer (b) comprises a monomer (b1), and the monomer (b1) is capable of forming a homopolymer having a glass transition temperature (Tg) of -20°C or higher and has a common logarithm log P of a n-octanol/water partition coefficient P of 0.9 or less.

As a result of diligent research to solve the above problems, the present inventors have found that the composition comprising the copolymer A and the antifouling agent D can solve the above problems and have completed the present invention.

### Description of Embodiments

The present invention will be described in detail below.

### 1. Antifouling Coating Composition

An antifouling coating composition of the present invention contains a copolymer A and an antifouling agent D.

### 1-1. Copolymer A

The copolymer A is a copolymer of a monomer (a) and an ethylenically unsaturated monomer (b) other than the monomer (a), and contains monomer units derived from the monomer (a) and the monomer (b). The content of the monomer (a) with respect to the total of the monomer (a) and the monomer (b) is preferably 10 to 90% by mass, and still more preferably 20 to 70% by mass. Specifically, the content thereof is, for example, 10, 15, 20, 25, 30, 35, 40, 45, 50, 55, 60, 65, 70, 75, 80, 85, or 90% by mass, and may be within the range between any two numerical values exemplified here. In this case, the coating film dissolubility is particularly good.

### 1-1-1. Monomer (a)

The monomer (a) is represented by general formula (1).

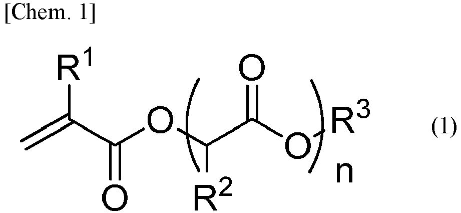

In the formula, R¹ represents hydrogen or a methyl group, R² represents hydrogen, a methyl group, or a phenyl group, R³ is an alkyl group having 1 to 8 carbon atoms optionally substituted with an alkoxy group having 1 to 8 carbon atoms or a phenyl group, or represents a phenyl group, and n represents an integer of 1 to 10.

R² is preferably hydrogen or a methyl group.

The number of carbon atoms in the alkoxy group or alkyl group of R³ is, for example, 1, 2, 3, 4, 5, 6, 7, or 8, and may be within the range between any two numerical values exemplified here. R³ is, for example, a methyl group, an ethyl group, a n-propyl group, an isopropyl group, a n-butyl group, a t-butyl group, a 2-ethylhexyl group, a cyclohexyl group, a benzyl group, a phenyl group, a 2-methoxyethyl group, a 4-methoxybutyl group, a vinyl group, or an allyl group, and is preferably a methyl group, an ethyl group, an isopropyl group, or a n-butyl group.

n represents an integer of 1 to 10, and n is, for example, 1, 2, 3, 4, 5, 6, 7, 8, 9, or 10, and may be within the range between any two numerical values exemplified here.

The monomer (a) contains a compound represented by general formula (1) in which n is 2 or more. When the compound in which n is 2 or more is contained as the monomer (a), the coating film dissolubility is increased. The monomer (a) may only be constituted by a compound in which n is 2 or more, or may be a mixture of a compound in which n is 1 and a compound in which n is 2 or more.

The monomer (a) is preferably constituted by a monomer (a1) and a monomer (a2). The content of the monomer (a1) in the monomer (a) is preferably 50 to 80% by mass, still more preferably 55 to 75% by mass, and particularly preferably 60 to 70% by mass. The monomer (a1) has the property of increasing the coating film strength and decreasing the coating film dissolubility as compared with the monomer (a2). Therefore, when the content of the monomer (a1) is too small, the strength of the coating film tends to decrease, and the coating film surface condition may deteriorate after a long period of time. On the other hand, when the content of the monomer (a1) is too large, the coating film dissolubility decreases, and the antifouling performance may deteriorate.

### <Monomer (a1)>

The monomer (a1) is a compound represented by general formula (1) in which n is 1.

Examples of the monomer (a1) include methoxycarbonylmethyl (meth)acrylate, ethoxycarbonylmethyl (meth)acrylate, isopropoxycarbonylmethyl (meth)acrylate, n-propoxycarbonylmethyl (meth)acrylate, n-butoxycarbonylmethyl (meth)acrylate, t-butoxycarbonylmethyl (meth)acrylate, 2-ethylhexyloxycarbonylmethyl (meth)acrylate, cyclohexyloxycarbonylmethyl (meth)acrylate, benzyloxycarbonylmethyl (meth)acrylate, phenoxycarbonylmethyl (meth)acrylate, 2-methoxyethoxycarbonylmethyl (meth)acrylate, 4-methoxybutoxycarbonylmethyl (meth)acrylate, allyloxycarbonylmethyl (meth)acrylate, vinyloxycarbonylmethyl (meth)acrylate, 1-(methoxycarbonyl)ethyl (meth)acrylate, 1-(ethoxycarbonyl)ethyl (meth)acrylate, 1-(n-propoxycarbonyl)ethyl (meth)acrylate, 1-(isopropoxycarbonyl)ethyl (meth)acrylate, 1-(n-butoxycarbonyl)ethyl (meth)acrylate, 1-(t-butoxycarbonyl)ethyl (meth)acrylate,α-(methoxycarbonyl)benzyl (meth)acrylate, and α-(ethoxycarbonyl)benzyl (meth)acrylate, and preferred examples thereof include methoxycarbonylmethyl (meth)acrylate, ethoxycarbonylmethyl (meth)acrylate, isopropoxycarbonylmethyl (meth)acrylate, n-butoxycarbonylmethyl (meth)acrylate, 1-(methoxycarbonyl)ethyl (meth)acrylate, and 1-(ethoxycarbonyl)ethyl (meth)acrylate.

### <Monomer (a2)>

The monomer (a2) is a compound represented by general formula (1) in which n is 2 or more. n in general formula (1) is preferably 2 to 6 from the viewpoint of long-term antifouling property.

The monomer (a2) preferably contains both a compound in which n is 2 and a compound in which n is 3 or more. Specifically, the mass ratio (n(2)/n(2 to 10)) in terms of solid content is preferably, for example, 0.4 to 0.8, and still more preferably 0.5 to 0.7. In this case, stable dissolution of the coating film tends to continue. Specifically, the value is, for example, 0.40, 0.45, 0.50, 0.55, 0.60, 0.65, 0.70, 0.75, or 0.80, and may be within the range between any two numerical values exemplified here.

Examples of the monomer (a2) include di(oxycarbonylmethyl) methyl (meth)acrylate, di(oxycarbonylmethyl) ethyl (meth)acrylate, di(oxycarbonylmethyl) isopropyl (meth)acrylate, di(oxycarbonylmethyl) n-propyl (meth)acrylate, di(oxycarbonylmethyl) n-butyl (meth)acrylate, di(oxycarbonylmethyl) t-butyl (meth)acrylate, di(oxycarbonylmethyl) 2-ethylhexyl (meth)acrylate, di(oxycarbonylmethyl) cyclohexyl (meth)acrylate, di(oxycarbonylmethyl) benzyl (meth)acrylate, di(oxycarbonylmethyl) phenyl (meth)acrylate, di(oxycarbonylmethyl) 2-methoxyethyl (meth)acrylate, di(oxycarbonylmethyl) 4-methoxybutyl (meth)acrylate, di(oxycarbonylmethyl) allyl (meth)acrylate, di(oxycarbonylmethyl) vinyl (meth)acrylate, di[1-(oxypolycarbonyl)ethyl] methyl (meth)acrylate, di[1-(oxypolycarbonyl)ethyl] ethyl (meth)acrylate, di[1-(oxypolycarbonyl)ethyl] n-propyl (meth)acrylate, di[1-(oxypolycarbonyl)ethyl] isopropyl (meth)acrylate, di[1-(oxypolycarbonyl)ethyl] n-butyl (meth)acrylate, di[1-(oxypolycarbonyl)ethyl] t-butyl (meth)acrylate, di[α-(oxycarbonyl)benzyl] methyl (meth)acrylate, and di[α-(oxycarbonyl)benzyl] ethyl (meth)acrylate, preferred examples thereof include di(oxycarbonylmethyl) methyl (meth)acrylate, di(oxycarbonylmethyl) ethyl (meth)acrylate, di(oxycarbonylmethyl) isopropyl (meth)acrylate, di(oxycarbonylmethyl) n-propyl (meth)acrylate, di(oxycarbonylmethyl) n-butyl (meth)acrylate, di[1-(oxypolycarbonylethyl)] methyl (meth)acrylate, di[1-(oxypolycarbonylethyl)] ethyl (meth)acrylate, poly(oxycarbonylmethyl) methyl (meth)acrylate, poly(oxycarbonylmethyl) ethyl (meth)acrylate, poly(oxycarbonylmethyl) isopropyl (meth)acrylate, poly(oxycarbonylmethyl) n-propyl (meth)acrylate, poly(oxycarbonylmethyl) n-butyl (meth)acrylate, poly(oxycarbonylmethyl) t-butyl (meth)acrylate, poly(oxycarbonylmethyl) 2-ethylhexyl (meth)acrylate, poly(oxycarbonylmethyl) cyclohexyl (meth)acrylate, poly(oxycarbonylmethyl) benzyl (meth)acrylate, poly(oxycarbonylmethyl) phenyl (meth)acrylate, poly(oxycarbonylmethyl) 2-methoxyethyl (meth)acrylate, poly(oxycarbonylmethyl) 4-methoxybutyl (meth)acrylate, poly(oxycarbonylmethyl) allyl (meth)acrylate, poly(oxycarbonylmethyl) vinyl (meth)acrylate, poly[1-(oxypolycarbonyl)ethyl] methyl (meth)acrylate, poly[1-(oxypolycarbonyl)ethyl] ethyl (meth)acrylate, poly[1-(oxypolycarbonyl)ethyl] n-propyl (meth)acrylate, poly[1-(oxypolycarbonyl)ethyl] isopropyl (meth)acrylate, poly[1-(oxypolycarbonyl)ethyl] n-butyl (meth)acrylate, poly[1-(oxypolycarbonyl)ethyl] t-butyl (meth)acrylate, poly[α-(oxycarbonyl)benzyl] methyl (meth)acrylate, and poly[α-(oxycarbonyl)benzyl] ethyl (meth)acrylate, and preferred examples thereof include poly(oxycarbonylmethyl) methyl (meth)acrylate, poly(oxycarbonylmethyl) ethyl (meth)acrylate, poly(oxycarbonylmethyl) isopropyl (meth)acrylate, poly(oxycarbonylmethyl) n-propyl (meth)acrylate, poly(oxycarbonylmethyl) n-butyl (meth)acrylate, poly [1-(oxypolycarbonylethyl)] methyl (meth)acrylate, and poly[1-(oxypolycarbonylethyl)] ethyl (meth)acrylate.

### 1-1-2. Monomer (b)

The monomer (b) is an ethylenically unsaturated monomer other than the monomer (a), and examples thereof include (meth)acrylic acid esters, vinyl compounds, aromatic compounds and dialkyl ester compounds of dibasic acids. As used herein, (meth)acrylic acid esters mean acrylic acid esters or methacrylic acid esters. The monomer (b) can be classified into a monomer (b1) and a monomer (b2), and the monomer (b) used in the polymerization of the copolymer A contains at least the monomer (b1).

### <Monomer (b1)>

The monomer (b1) is an ethylenically unsaturated monomer which is capable of forming a homopolymer having a glass transition temperature (Tg) of -20°C or higher and has a common logarithm log P of a n-octanol/water partition coefficient P of 0.9 or less.

The glass transition temperature (Tg) of the homopolymer is preferably 0°C or higher, still more preferably 20°C or higher, from the viewpoint of improving the strength and crack resistance of the antifouling coating film. The Tg is, for example, -20 to 300°C, specifically, for example, -20, 0, 20, 40, 60, 80, 100, 120, 140, 160, 180, 200, 220, 240, 260, 280, or 300°C, and may be within the range between any two numerical values exemplified here or may be any one of the numerical values exemplified here or more. The glass transition temperature (Tg) of the homopolymer in the present disclosure refers to a value as measured in accordance with ASTM E1356-08 and means Midpoint Temperature (Tm).

The partition coefficient P is the value of the ratio of the partition concentration of a substance to each phase of the two-phase solvent system consisting of n-octanol and water, and log P is the common logarithm of the partition coefficient P. A smaller log P value means higher hydrophilicity (lower lipophilicity). As used herein, log P means a value calculated based on the Crippen's fragmentation method (J. Chem. Inf. Comput. Sci., 27, 21 (1987)). The log P by this method can be calculated using, for example, the program PerkinElmer's ChemDraw Professional 17.0.

The log P is preferably 0.8 or less, and still more preferably 0.6 or less. Further, from the viewpoint of the water resistance of the coating film, the log P is preferably -0.8 or more. The log P is, for example, - 0.80 to 0.90, specifically, for example, -0.80, -0.75, -0.70, -0.65, -0.60, -0.55, -0.50, -0.45, -0.40, -0.35, - 0.30, -0.25, -0.20, -0.15, -0.10, -0.05, 0.00, 0.05, 0.10, 0.15, 0.20, 0.25, 0.30, 0.35, 0.40, 0.45, 0.50, 0.55, 0.60, 0.65, 0.70, 0.75, 0.80, 0.85, or 0.90, and may be within the range between any two numerical values exemplified here or may be any one of the numerical values exemplified here or less.

Examples of the monomer (b1) include N-(2-hydroxyethyl)acrylamide (Tg: 98°C, log P: -0.56), 2,3-dihydroxypropyl methacrylate (Tg: 55°C, log P: -0.06), (meth)acrylamide (Tg: 165°C, log P: -0.27), acryloylmorpholine (Tg: 145°C, log P: -0.20), 2-(acetoacetyloxy)ethyl methacrylate (Tg: 9°C, log P: 0.27), mono(2-acryloyloxyethyl) succinate (Tg: -14°C, log P: 0.02), N-(3-dimethylaminopropyl)acrylamide (Tg: 134°C, log P: 0.07), N-(3-dimethylaminopropyl)methacrylamide (Tg: 96°C, log P: 0.42), 2-hydroxyethyl acrylate (Tg: -15°C, log P: 0.12), 2-hydroxyethyl methacrylate (Tg: 55°C, log P: 0.47), N,N'-dimethylacrylamide (Tg: 119°C, log P: 0.20), glycidyl methacrylate (Tg: 46°C, log P: 0.57), N-vinyl-2-pyrrolidone (Tg: 177°C, log P: 0.24), 2-hydroxypropyl acrylate (Tg: -7°C, log P: 0.44), 2-hydroxypropyl methacrylate (Tg: 26°C, log P: 0.79), vinyl acetate (Tg: 28°C, log P: 0.54), methyl acrylate (Tg: 8°C, log P: 0.64), N-isopropylacrylamide (Tg: 134°C, log P: 0.62), tetrahydrofurfuryl acrylate (Tg: -12°C, log P: 0.78), 2-ethoxyethyl acrylate (Tg: 16°C, log P: 0.83), and N,N-diethylacrylamide (Tg: 81°C, log P: 0.87). These monomers (b1) may be used singly, or two or more thereof may be used in combination.

### <Monomer (b2)>

The monomer (b2) is the monomer (b) excluding the monomer (b1).

Examples of (meth)acrylic acid esters as the monomer (b2) include (meth)acrylic acid esters, such as methyl methacrylate (Tg: 105°C, log P: 0.99), ethyl acrylate (Tg: -22°C, log P: 0.98), ethyl methacrylate (Tg: 65°C, log P: 1.33), butyl acrylate (Tg: -54°C, log P: 1.88), butyl methacrylate (Tg: 20°C, log P: 2.23), isobutyl acrylate (Tg: -26°C, log P: 1.86), isobutyl methacrylate (Tg: 48°C, log P: 2.21), t-butyl acrylate (Tg: 14°C, log P: 1.51), t-butyl methacrylate (Tg: 107°C, log P: 1.86), 2-ethylhexyl acrylate (Tg: -85°C, log P: 3.53), 2-ethylhexyl methacrylate (Tg: -10°C, log P: 3.88), lauryl acrylate (Tg: -23°C, log P: 5.22), lauryl methacrylate (Tg: -65°C, log P: 5.57), benzyl acrylate (Tg: 6°C, log P: 2.37), benzyl methacrylate (Tg: 54°C, log P: 2.72), phenyl acrylate (Tg: 57°C, log P: 2.30), and cyclic trimethylolpropane formal acrylate (Tg: 27°C, log P: 1.45); and
(meth)acrylic acid silyl esters, such as triisopropylsilyl acrylate (Tg: 34°C) and triisopropylsilyl methacrylate (Tg: 86°C).

Examples of the vinyl compounds as the monomer (b2) include vinyl compounds having a functional group, such as vinyl chloride (Tg: 87°C, log P: 1.51), vinylidene chloride (Tg: -18°C, log P: 1.79), vinyl benzoate (log P: 1.79), vinyl butyrate (Tg: -5°C, log P: 1.61), butyl vinyl ether (log P: 1.91), and lauryl vinyl ether (log P: 5.25).

Examples of aromatic compounds as the monomer (b2) include styrene (Tg: 110°C, log P: 2.67), vinyl toluene (log P: 3.16), and α-methylstyrene (Tg: 168°C, log P: 2.84).

Examples of dialkyl ester compounds of dibasic acids as the monomer (b2) include dibutyl maleate (log P: 2.65).

### 1-1-3. Physical Properties and Production Method of Copolymer A

The weight-average molecular weight (Mw) of the copolymer A is preferably 5,000 to 300,000. When the molecular weight is less than 5,000, the coating film formed of the antifouling coating material becomes fragile and easily peels off or cracks, and when the molecular weight exceeds 300,000, the viscosity of the polymer solution increases and handling becomes difficult. Specifically, the Mw is, for example, 5,000, 10,000, 20,000, 30,000, 40,000, 50,000, 60,000, 70,000, 80,000, 90,000, 100,000, 200,000, or 300,000, and may be within the range between any two numerical values exemplified here.

Examples of the method for measuring Mw include gel permeation chromatography (GPC method).

The copolymer A may be a random copolymer, an alternating copolymer, a periodic copolymer, or a block copolymer of the monomer (a1), the monomer (a2), the monomer (b1), and the monomer (b2).

The copolymer A may be obtained, for example, by polymerizing the monomer (a1), the monomer (a2), the monomer (b1), and the monomer (b2) in the presence of a polymerization initiator.

Examples of the polymerization initiator include azo compounds such as 2,2'-azobisisobutyronitrile, 2,2'-azobis(2-methylbutyronitrile), 2,2'-azobis(2,4-dimethylvaleronitrile), dimethyl-2,2'-azobisisobutyrate, dimethyl-2,2'-azobisisobutyrate, and 2,2'-azobis(N-butyl-2-methylpropionamide); peroxides such as benzoyl peroxide, di-tert-butyl peroxide, tert-butyl peroxybenzoate, tert-butyl peroxyisopropyl carbonate, t-butyl peroxy-2-ethylhexanoate, t-hexylperoxy-2-ethylhexanoate, di-t-hexyl peroxide, t-butylperoxy-2-ethylhexyl monocarbonate, di-t-butyl peroxide, 1,1,3,3-tetramethylbutylperoxyneodecanoate, t-amylperoxyneodecanoate, t-hexylperoxypivalate, t-amylperoxypivalate, and 1,1,3,3-tetramethylbutylperoxy-2-ethylhexanoate. These polymerization initiators may be used singly, or two or more thereof may be used in combination. Particularly preferred as the polymerization initiator are 2,2'-azobisisobutyronitrile, 2,2'-azobis(2-methylbutyronitrile), 2,2'-azobis(2,4-dimethylvaleronitrile), dimethyl 2,2'-azobisisobutyrate, and 1,1,3,3-tetramethylbutylperoxy-2-ethylhexanoate. The amount of the polymerization initiator used may be set as appropriate to adjust the molecular weight of the copolymer A. A chain transfer agent may also be used to adjust the molecular weight of the resulting polymer. Examples of the chain transfer agent include mercaptans such as n-dodecylmercaptan; thioglycolic acid esters such as octyl thioglycolate; and α-methylstyrene dimer and terpinolene.

Examples of the polymerization method include solution polymerization, bulk polymerization, emulsion polymerization, suspension polymerization, and non-aqueous dispersion polymerization. Among these, solution polymerization or non-aqueous dispersion polymerization is particularly preferred in that the copolymer A simply and accurately can be obtained therethrough.

In the polymerization reaction, an organic solvent may be used as necessary. Examples of the organic solvent include, but are not limited to, aromatic hydrocarbon solvents such as xylene and toluene; aliphatic hydrocarbon solvents; ester solvents such as ethyl acetate, butyl acetate, isobutyl acetate, methoxy propyl acetate, and propylene glycol 1-monomethyl ether 2-acetate; alcohol solvents such as isopropyl alcohol, butyl alcohol, and propylene glycol monomethyl ether; ether solvents such as dioxane, diethyl ether, and dibutyl ether; and ketone solvents such as methyl ethyl ketone and methyl isobutyl ketone.

Among these, preferred are butyl acetate, isobutyl acetate, butyl alcohol, propylene glycol monomethyl ether, propylene glycol 1-monomethyl ether 2-acetate, toluene, and xylene. These solvents may be used singly, or two or more thereof may be used in combination.

The reaction temperature in the polymerization reaction may be set as appropriate according to the type of the polymerization initiator and the like, and is usually 50 to 160°C, preferably 60 to 150°C.

The polymerization reaction is preferably carried out under an inert gas atmosphere such as nitrogen gas or argon gas.

### 1-2. Antifouling Agent D

Examples of the antifouling agent include inorganic agents and organic agents.

Examples of inorganic chemicals include cuprous oxide, copper thiocyanate (generic name: copper rhodanide), and copper powder. Among these, preferred are cuprous oxide and copper rhodanide, and more preferred is cuprous oxide surface-treated with glycerin, sucrose, stearic acid, lauric acid, lecithin, mineral oil and the like in view of long-term stability during storage.

Examples of organic agents include copper 2-mercaptopyridine-N-oxide (generic name: copper pyrithione), zinc 2-mercaptopyridine-N-oxide (generic name: zinc pyrithione), zinc ethylene-bis-dithiocarbamate (generic name: Zineb), 4,5-dichloro-2-n-octyl-3-isothiazolone (generic name: SEA-NINE 211), 3,4-dichlorophenyl-N,N-dimethylurea (generic name: Diuron), 2-methylthio-4-t-butylamino-6-cyclopropylamino-s-triazine (generic name: Irgarol 1051), 2-(p-chlorophenyl)-3-cyano-4-bromo-5-trifluoromethylpyrrole (generic name: Econea 28), and 4-[1-(2,3-dimethylphenyl)ethyl]-1H-imidazole (generic name: medetomidine).
These antifouling agents may be used singly, or two or more thereof may be used in combination.

The content of the antifouling agent in the composition of the present invention is not particularly limited, but is usually 0.1 to 60.0% by mass, in terms of solid content. The content of the antifouling agent is, for example, 0.1, 0.5, 1, 2, 3, 4, 5, 6, 7, 8, 9, 10, 15, 20, 25, 30, 35, 40, 45, 50, 55, or 60% by mass, and may be within the range between any two numerical values exemplified here.

### 1-3. Other Additives

If necessary, a resin component other than the copolymer A, a release modifier, a plasticizer, a pigment, a dye, an antifoaming agent, a dehydrating agent, a thixotropic agent, an organic solvent, or the like may be further added to the resin for the antifouling coating material of the present invention to obtain the antifouling coating material.

Examples of the other resin component include a copolymer B.

The copolymer B is a copolymer of the monomer (b1) and the monomer (b2), and contains monomer units derived from the monomer (b1) and the monomer (b2). The content of the monomer (b1) with respect to the total of the monomer (b1) and the monomer (b2) is preferably 10 to 90% by mass, and still more preferably 20 to 70% by mass. Specifically, the content thereof is, for example, 10, 15, 20, 25, 30, 35, 40, 45, 50, 55, 60, 65, 70, 75, 80, 85, or 90% by mass, and may be within the range between any two numerical values exemplified here. In this case, the coating film dissolubility is particularly good.

The polymerization method, initiator, solvent, temperature, other conditions, Mw measurement method, and the like may be applied to the method described above for the copolymer A.

The content of the copolymer B in the composition of the present invention is not particularly limited, but the mass ratio (copolymer B/copolymer A) as the content ratio with respect to the copolymer A is usually 0.1 to 0.9, and preferably 0.3 to 0.7, in terms of solid content. The mass ratio is, for example, 0.1, 0.2, 0.3, 0.4, 0.5, 0.6, 0.7, 0.8, or 0.9, and may be within the range between any two numerical values exemplified here.

Examples of the release modifier include rosin, rosin derivative, monocarboxylic acid and salts thereof, such as naphthenic acid, cycloalkenyl carboxylic acid, bicycloalkenyl carboxylic acid, versatic acid, trimethyl isobutenyl cyclohexene carboxylic acid, and metal salts thereof, and alicyclic hydrocarbon resins described above. These may be used singly or in combination of two or more thereof.

Examples of the rosin derivative include hydrogenated rosin, disproportionated rosin, maleated rosin, formylated rosin, and polymerized rosin.

Examples of the alicyclic hydrocarbon resin include commercially available products such as Quintone 1500, 1525L, and 1700 (product names, manufactured by ZEON CORPORATION).

Among these, preferred are rosin, rosin derivatives, naphthenic acid, versatic acid, trimethylisobutenylcyclohexenecarboxylic acid, and metal salts thereof.

Examples of the dehydrating agent include calcium sulfate, synthetic zeolite adsorbents, orthoesters, silicates such as tetramethoxysilane and tetraethoxysilane, isocyanates, carbodiimides, and carbodiimidazoles. These may be used singly, or two or more thereof may be used in combination.

### 2. Method for Producing Antifouling Coating Composition

The antifouling coating composition of the present invention may be produced, for example, by mixing and dispersing a mixed solution containing the copolymer A, the antifouling agent, other additives, and the like using a disperser.

The mixed solution is preferably prepared by dissolving or dispersing various materials such as the copolymer A and the antifouling agent in a solvent.

A disperser that may be used as a fine pulverizer may be suitably used, for example, as the disperser. For example, commercially available homomixers, sand mills, bead mills, dispersers, or the like may be used. Alternatively, glass beads or the like for mixing and dispersing may be charged into a container equipped with a stirrer and used for mixing and dispersing the mixed solution.

### 3. Method for Antifouling Treatment, Antifouling Coating Film, and Coated Article

In the antifouling treatment method of the present invention, an antifouling coating film is formed on the surface of an object to be coated with the above antifouling coating composition. According to the antifouling treatment method of the present invention, the antifouling coating film gradually dissolves from the surface and the coating film surface is constantly renewed, thereby preventing adhesion of aquatic fouling organisms.

Examples of the object to be coated include ships (in particular, ship bottoms), fishing tools, and underwater structures.

The thickness of the antifouling coating film may be set as appropriate according to the type of object to be coated, sailing speed of the ship, seawater temperature, and the like. For example, in a case where the object to be coated is the bottom of a ship, the thickness of the antifouling coating film is usually 50 to 700 µm, and preferably 100 to 600 µm.

### Examples

The features of the present invention will be further clarified by Examples and the like to be described below. The present invention, however, is not limited to these Examples and the like.

In each of Production Examples, Examples, and Comparative Examples, "%" represents "% by mass". The weight-average molecular weight (Mw) is a value obtained by GPC (polystyrene equivalent). The conditions for GPC were as follows.
Equipment: HLC-8220GPC manufactured by Tosoh Corporation
Column: TSKgel SuperHZM-M × 2
Flow rate: 0.35 mL/min
Detector: RI
Column thermostatic bath temperature: 40°C
Eluent: THF

The non-volatile matter is a value measured in accordance with JIS K 5601-1-2:1999 (ISO 3251:1993) "Testing Methods for Paint Components: Determination Of Non-Volatile matter".

The log P values in Table 5 are values obtained using the program PerkinElmer's ChemDraw Professional 17 Suite.

### 1. Production Example

### 1-1. Production Example of Monomer (a1)

### <Production Example 1 (Production of Monomer a1-1)>

Into a four-necked flask equipped with a thermometer, a condenser, a stirrer, and a dropping funnel, 109 g (1.00 mol) of methyl chloroacetate, 72 g (1.00 mol) of acrylic acid, 0.1 g of 4-methoxyphenol, and 500 g of ethyl acetate were charged, and 101 g (1.00 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with city water, hydrochloric acid water, and sodium bicarbonate water in this order, and the solvent was removed by concentration under reduced pressure to give 129.7 g of a monomer a1-1.

### <Production Examples 2 to 3 (Production of Monomers a1-2 to a1-3)>

Monomers a1-2 to a1-3 were obtained by performing reactions in the same manner as in Production Example 1 using the raw materials shown in Table 1. The reaction conditions and yields of Production Examples 1 to 3 are shown in Table 1.

**[Table 1]**

| Table 1 | | | | | | Raw material (g) | | | | | | | Yield |
|---|---|---|---|---|---|---|---|---|---|---|---|---|---|
| Production Example | Monomer | R1 | R2 | R3 | n | CAMe | CAEt | AA | MAA | TEA | Ethyl acetate | MEHQ | (g) |
| 1 | a1-1 | H | H | Me | 1 | 109 | | 72 | | 101 | 500 | 0.1 | 129.7 |
| 2 | a1-2 | H | H | Et | 1 | | 123 | 72 | | 101 | 500 | 0.1 | 142.3 |
| 3 | a1-3 | Me | H | Et | 1 | | 123 | | 86 | 101 | 500 | 0.1 | 155.0 |

### 1-2. Production Example of Monomer (a2)

### <Production Example 4 (Production of Monomer a2-1)>

### (First Reaction)

Into a four-necked flask equipped with a thermometer, a condenser, and a stirrer, 215 g (1.85 mol) of sodium monochloroacetate, 201 g (1.85 mol) of methyl chloroacetate, and 300 g of N-methyl-2-pyrrolidone were charged, and the mixture was stirred at 70 to 80°C for 6 hours. After completion of the reaction, 500 ml of toluene was added to the reaction solution, and the organic layer was washed with city water, hydrochloric acid water, and sodium bicarbonate water in this order, and then the solvent was removed by concentration under reduced pressure to give 262 g of methoxycarbonyl methyl chloroacetate.

### (Second Reaction)

Subsequently, into a four-necked flask equipped with a thermometer, a condenser, a stirrer, and a dropping funnel, 200 g (1.20 mol) of methoxycarbonyl methyl chloroacetate, which is the product of the first reaction, 87 g (1.20 mol) of acrylic acid, 0.1 g of 4-methoxyphenol, and 500 g of ethyl acetate were charged, and 122 g (1.20 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with city water, hydrochloric acid water, and sodium bicarbonate water in this order, and the solvent was removed by concentration under reduced pressure to give 230.6 g of a monomer a2-1.

### <Production Examples 5 to 18 (Production of Monomers a2-2 to a2-15)>

Monomers a2-2 to a2-15 shown in Table 2 were obtained by performing reactions in the same manner as in Production Example 4 using the raw materials shown in Table 2. The reaction conditions and yields of Production Examples 4 to 18 are shown in Table 2.

**[Table 2]**

| Table 2 | | | | | | First reaction | | | | | Second reaction | | | | | | |
|---|---|---|---|---|---|---|---|---|---|---|---|---|---|---|---|---|---|
| | | | | | | Raw material (g) | | | | Intermediate | Raw material (g) | | | | | | Yield |
| Production Example | Monomer | R1 | R2 | R3 | n | CANa | CAMe | CAEt | NMP | Yield (g) | Intermediate | AA | MAA | TEA | Ethyl acetate | MEHQ | (g) |
| 4 | a2-1 | H | H | Me | 2 | 215 | 201 | | 300 | 262 | 200 | 87 | | 122 | 500 | 0.1 | 230.6 |
| 5 | a2-2 | H | H | Et | 2 | 199 | | 209 | 300 | 269 | 200 | 80 | | 112 | 500 | 0.1 | 227.5 |
| 6 | a2-3 | Me | H | Et | 2 | 199 | | 209 | 300 | 269 | 200 | | 95 | 112 | 500 | 0.1 | 227.5 |
| 7 | a2-4 | H | H | Me | 3 | 321 | 150 | | 300 | 260 | 200 | 64 | | 90 | 500 | 0.1 | 220.1 |
| 8 | a2-5 | H | H | Et | 3 | 305 | | 160 | 300 | 266 | 200 | 60 | | 85 | 500 | 0.1 | 218.3 |
| 9 | a2-6 | Me | H | Et | 3 | 305 | | 160 | 300 | 266 | 200 | | 72 | 85 | 500 | 0.1 | 218.3 |
| 10 | a2-7 | H | H | Me | 4 | 384 | 119 | | 300 | 261 | 200 | 51 | | 72 | 500 | 0.1 | 232. 8 |
| 11 | a2-8 | H | H | Et | 4 | 349 | | 123 | 300 | 252 | 200 | 49 | | 68 | 500 | 0.1 | 193.6 |
| 12 | a2-9 | Me | H | Et | 4 | 349 | | 123 | 300 | 252 | 200 | | 58 | 68 | 500 | 0.1 | 193.6 |
| 13 | a2-10 | H | H | Me | 5 | 419 | 98 | | 300 | 258 | 200 | 42 | | 59 | 500 | 0.1 | 208.8 |
| 14 | a2-11 | H | H | Et | 5 | 373 | | 98 | 300 | 241 | 200 | 41 | | 57 | 500 | 0.1 | 177.0 |
| 15 | a2-12 | Me | H | Et | 5 | 382 | | 100 | 300 | 247 | 200 | | 49 | 57 | 500 | 0.1 | 177.0 |
| 16 | a2-13 | H | H | Me | 6 | 437 | 81 | | 300 | 251 | 200 | 36 | | 51 | 500 | 0.1 | 191.8 |
| 17 | a2-14 | H | H | Et | 6 | 408 | | 86 | 300 | 246 | 200 | 35 | | 49 | 500 | 0.1 | 165.0 |
| 18 | a2-15 | Me | H | Et | 6 | 408 | | 86 | 300 | 246 | 200 | | 42 | 49 | 500 | 0.1 | 165.0 |

The details of the raw materials in Tables 1 to 2 are as follows.
CAMe: methyl chloroacetate
CAEt: ethyl chloroacetate
AA: acrylic acid
MAA: methacrylic acid
TEA: triethylamine
MEHQ: 4-methoxyphenol
CANa: sodium monochloroacetate
NMP: N-methyl-2-pyrrolidone

### 1-3. Production Example of Copolymer Solution

### <Production Example P1 (Production of Copolymer Solution A-1)>

Into a four-necked flask equipped with a thermometer, a condenser, a stirrer, and a dropping funnel, 80 g of xylene and 20 g of 1-butanol were charged as solvents, nitrogen gas was introduced, and the mixture was stirred while maintaining the temperature at 88°C. Then, a mixed solution of the monomer (a1), the monomer (a2), the monomer (b1), and the monomer (b2) in the amounts (g) shown in Table 3 and 2.0 g of 1,1,3,3-tetramethylbutylperoxy-2-ethylhexanoate as a polymerization initiator (initial addition) was added dropwise over 3 hours while maintaining the temperature at 88°C. Thereafter, after stirring at 88°C for 1 hour, 0.1 g of 1,1,3,3-tetramethylbutylperoxy-2-ethylhexanoate was added 3 times every hour, and after stirring for 2 hours at the same temperature, the mixture was cooled to room temperature to obtain a copolymer solution A-1. The non-volatile matter and Mw of A-1 are shown in Table 3.

### <Production Examples P2 to P16 (Production of Copolymer Solutions A-2 to 13 and B-1 to 3)>

Copolymer solutions A-2 to A-13 and B-1 to B-3 were obtained by performing a polymerization reaction in the same manner as in Production Example P1 except that the monomers, polymerization initiators, and solvents shown in Tables 3 to 4 were used. The non-volatile matter and Mw of each polymer are shown in Table 3. The unit of numerical values for the amounts of raw materials in the table is g.

**[Table 3]**

| Table 3 | | Production Example | | | | | | | |
|---|---|---|---|---|---|---|---|---|---|
| | | P1 | P2 | P3 | P4 | P5 | P6 | P7 | P8 |
| Monomer (a) | a1-1 | | 33 | | | | | | |
| | a1-2 | | | 40 | 40 | 40 | 40 | 40 | 40 |
| | a2-1 | | 10 | | | | | | |
| | a2-2 | 60 | | 12 | 12 | 12 | 12 | 12 | 12 |
| | a2-4 | | 4 | | | | | | |
| | a2-5 | | | 5 | 5 | 5 | 5 | 5 | 5 |
| | a2-7 | | 1 | | | | | | |
| | a2-8 | | | 1 | 1 | 1 | 1 | 1 | 1 |
| | a2-10 | | 1 | | | | | | |
| | a2-11 | | | 1 | 1 | 1 | 1 | 1 | 1 |
| | a2-13 | | 1 | | | | | | |
| | a2-14 | | | 1 | 1 | 1 | 1 | 1 | 1 |
| Monomer (b1) | acryloylmorpholine | | | 10 | | | | | |
| | N,N-dimethylacrylamide | 10 | 10 | | 10 | | | | |
| | N-vinyl-2-pyrrolidone | | | | | 10 | | | |
| | N-isopropylacrylamide | | | | | | 10 | | |
| | N,N-diethylacrylamide | | | | | | | 10 | |
| | 2-hydroxyethyl methacrylate | | | | | | | | 10 |
| Monomer (b2) | methyl methacrylate | 30 | 40 | 30 | 30 | 30 | 30 | 30 | 30 |
| Total of monomer solid contents | | 100 | \| 100 | 100 | 100 | 100 | 100 | 100 | 100 |
| Solvent | xylene | 80 | 80 | 50 | 50 | 50 | 80 | 50 | 80 |
| | 1-butanol | 20 | 20 | | | | 20 | | 20 |
| | butyl acetate | | | 50 | 50 | 50 | | 50 | |
| Weight-average molecular weight (Mw) | | 30800 | 31200 | 31400 | 31600 | 30500 | 32000 | 31300 | 30500 |
| Non-volatile matter (%, 125°C, 1 hour) | | 51.2 | 51.5 | 51.3 | 51.6 | 50.9 | 51.2 | 50.8 | 51.0 |
| Copolymer solution name | | A-1 | A-2 | A-3 | A-4 | A-5 | A-6 | A-7 | A-8 |

**[Table 4]**

| Table 4 | | Production Example | | | | | | | |
|---|---|---|---|---|---|---|---|---|---|
| | | P9 | P10 | P11 | P12 | P13 | P14 | P15 | P16 |
| Monomer (a) | a1-2 | 40 | 40 | 40 | | 20 | 40 | 40 | |
| | a1-3 | | | | 47 | 23 | | | 47 |
| | a2-2 | 12 | 12 | 12 | | 4 | 12 | 12 | |
| | a2-3 | | | | 8 | 4 | | | 8 |
| | a2-5 | 5 | 5 | 5 | | 3 | 5 | 5 | |
| | a2-6 | | | | 2 | 2 | | | 2 |
| | a2-8 | 1 | 1 | 1 | | 1 | 1 | 1 | |
| | a2-9 | | | | 1 | 1 | | | 1 |
| | a2-11 | 1 | 1 | 1 | | 1 | 1 | 1 | |
| | a2-12 | | | | 1 | 1 | | | 1 |
| | a2-14 | 1 | 1 | 1 | | | 1 | 1 | |
| | a2-15 | | | | 1 | | | | 1 |
| Monomer (b1) | N,N-dimethylacrylamide | | | | | 10 | | | |
| | vinyl acetate | 10 | | | | | | | |
| | glycidyl methacrylate | | 10 | | | | | | |
| | acrylamide | | | 5 | | | | | |
| | tetrahydrofurfuryl acrylate | | | | 10 | | | | |
| Monomer (b2) | methyl methacrylate | 30 | 30 | 35 | 20 | 30 | 30 | 40 | 30 |
| | 2-methoxyethyl acrylate | | | | | | 10 | | |
| | n-butyl acrylate | | | | 10 | | | | |
| | 2-(2-ethoxyethoxy)ethyl acrylate | | | | | | | | 10 |
| Total of monomer solid contents | | 100 | 100 | 100 | 100 | 100 | 100 | 100 | 100 |
| Solvent | xylene | 50 | 50 | 50 | 50 | 50 | 80 | 50 | 50 |
| | 1-butanol | | | | | | 20 | | |
| | butyl acetate | 50 | 50 | 50 | 50 | 50 | | 50 | 50 |
| Weight-average molecular weight (Mw) | | 31300 | 29900 | 31800 | 29400 | 29900 | 30100 | 29900 | 32100 |
| Non-volatile matter (%, 125°C, 1 hour) | | 50.8 | 51.4 | 51.7 | 51.1 | 51.1 | 51.2 | 51.1 | 51.3 |
| Copolymer solution name | | A-9 | A-10 | A-11 | A-12 | A-13 | B-1 | B-2 | B-3 |

The Tg and log P of the monomer (b) in Tables 3 and 4 are shown in Table 5.

**[Table 5]**

| Table 5 | | Tg (°C) | log P |
|---|---|---|---|
| Monomer (b1) | acryloylmorpholine | 145 | -0.20 |
| | N,N-dimethylacrylamide | 119 | 0.20 |
| | N-vinyl-2-pyrrolidone | 177 | 0.24 |
| | N-isopropylacrylamide | 134 | 0.62 |
| | N,N-diethylacrylamide | 81 | 0.87 |
| | 2-hydroxyethyl methacrylate | 55 | 0.47 |
| | vinyl acetate | 28 | 0.54 |
| | glycidyl methacrylate | 46 | 0.57 |
| | acrylamide | 165 | -0.27 |
| | tetrahydrofurfuryl acrylate | -12 | 0.78 |
| Monomer (b2) | methyl methacrylate | 105 | 0.99 |
| | 2-methoxyethyl acrylate | -50 | 0.48 |
| | n-butyl acrylate | -54 | 1.88 |
| | 2-(2-ethoxyethoxy)ethyl acrylate | -67 | 0.67 |

### 1-4. Other Production Examples

### <Production Example C1 (Production of Gum Rosin Solution)>

Into a flask equipped with a thermometer, a refluxing condenser, and a stirrer, 300 g of Chinese gum rosin (WW) and 310 g of xylene were added, and the mixture was refluxed and dehydrated under reduced pressure at 70 to 80°C for 1 hour to obtain a xylene solution of gum rosin (brown transparent liquid, solid content: 50%). The non-volatile matter of the resulting solution was 50.3%.

### <Production Example C2 (Production of Gum Rosin Zinc Salt Solution)>

Into a flask equipped with a thermometer, a refluxing condenser, and a stirrer, 240 g of Chinese gum rosin (WW) and 360 g of xylene were added, and 120 g of zinc oxide was further added thereto so that all the resin acids in the rosin form zinc salts, and the mixture was refluxed and dehydrated under reduced pressure at 70 to 80°C for 3 hours. Thereafter, the mixture was cooled and filtered to obtain a xylene solution of gum rosin zinc salt (dark brown transparent liquid, solid content 50%). The non-volatile matter of the resulting solution was 50.2%.

### 2. Examples 1 to 13 and Comparative Examples 1 to 3 (Production of Coating Composition)

The components shown in Tables 6 to 7 were blended in the proportions (% by mass) shown in the same tables, and the coating compositions were produced by mixing and dispersing the mixture with glass beads of 1.5 to 2.5 mm in diameter.

**[Table 6]**

| Table 6 | | | Example | | | | | | | |
|---|---|---|---|---|---|---|---|---|---|---|
| | | | 1 | 2 | 3 | 4 | 5 | 6 | 7 | 8 |
| Copolymer | copolymer solution A-1 | | 25 | | | | | | | |
| | copolymer solution A-2 | | | 25 | | | | | | |
| | copolymer solution A-3 | | | | 25 | | | | | |
| | copolymer solution A-4 | | | | | 25 | | | | |
| | copolymer solution A-5 | | | | | | 25 | | | |
| | copolymer solution A-6 | | | | | | | 25 | | |
| | copolymer solution A-7 | | | | | | | | 25 | |
| | copolymer solution A-8 | | | | | | | | | 25 |
| Release modifier | gum rosin zinc salt solution | | | 6 | | 6 | | 6 | | 6 |
| | gum rosin solution | | 6 | | 6 | | 6 | | 6 | |
| Antifouling agent | cuprous oxide | | 45 | 45 | 45 | 45 | 45 | 45 | 45 | 45 |
| | copper pyrithione | | 3 | 3 | 3 | 3 | 3 | 3 | 3 | 3 |
| Pigment | red iron oxide | | 2 | 2 | 2 | 2 | 2 | 2 | 2 | 2 |
| | talc | | 2 | 2 | 2 | 2 | 2 | 2 | 2 | 2 |
| | zinc oxide | | 4 | 4 | 4 | 4 | 4 | 4 | 4 | 4 |
| | titanium oxide | | 1 | 1 | 1 | 1 | 1 | 1 | 1 | 1 |
| Other additives | Disparlon A603-20X | | 3 | 3 | 3 | 3 | 3 | 3 | 3 | 3 |
| | tetraethoxysilane | | 0.5 | 0.5 | 0.5 | 0.5 | 0.5 | 0.5 | 0.5 | 0.5 |
| | tricresyl phosphate | | 2 | 2 | 2 | 2 | 2 | 2 | 2 | 2 |
| Solvent | xylene | | 3.5 | 5.5 | 3.5 | 5.5 | 3.5 | 5.5 | 3.5 | 3.5 |
| | 1-butanol | | | 1 | | 1 | | 1 | | |
| | butyl acetate | | 3 | | 3 | | 3 | | 3 | 3 |
| Total | | | 100 | 100 | 100 | 100 | 100 | 100 | 100 | 100 |
| Test Example 1 Rotary Test | average coating film dissolution amount (µm/month) | initial to 6 months later | 8.3 | 5.8 | 8.3 | 7.5 | 6.7 | 4.2 | 3.3 | 5.0 |
| | | after 6 to 12 months | 7.5 | 6.7 | 8.3 | 7.5 | 6.7 | 2.5 | 1.3 | 4.3 |
| | | after 12 to 18 months | 9.2 | 9.2 | 100 | 8.3 | 8.3 | 4.7 | 4.5 | 5.7 |
| | | after 18 to 24 months | 100 | 5.8 | 6.7 | 6.7 | 6.7 | 3.2 | 4.2 | 5.0 |
| | | after 24 to 30 months | 6.7 | 8.3 | 6.7 | 6.7 | 6.7 | 4.3 | 3.0 | 6.2 |
| | | after 30 to 36 months | 7.5 | 7.5 | 100 | 8.3 | 8.3 | 2.8 | 2.0 | 5.2 |
| | coating film condition after 24 months | | AA | AA | AA | AA | AA | AA | AA | AA |
| | coating film condition after 36 months | | AA | AA | AA | AA | AA | AA | AA | B |
| Test Example 2 Antifouling Test | after 12 months | | AA | AA | AA | AA | AA | AA | AA | AA |
| | after 24 months | | AA | AA | AA | AA | AA | AA | AA | AA |
| | after 36 months | | A | A | A | A | A | A | A | A |

**[Table 7]**

| Table 7 | | | Example | | | | | Comparative Example | | |
|---|---|---|---|---|---|---|---|---|---|---|
| | | | 9 | 10 | 11 | 12 | 13 | 1 | 2 | 3 |
| Copolymer | copolymer solution A-9 | | 25 | | | | | | | |
| | copolymer solution A-10 | | | 25 | | | | | | |
| | copolymer solution A-11 | | | | 25 | | | | | |
| | copolymer solution A-12 | | | | | 25 | | | | |
| | copolymer solution A-13 | | | | | | 25 | | | |
| | copolymer solution B-1 | | | | | | | 25 | | |
| | copolymer solution B-2 | | | | | | | | 25 | |
| | copolymer solution B-3 | | | | | | | | | 25 |
| Release modifier | gum rosin zinc salt solution | | | 6 | | | | 6 | | 6 |
| | gum rosin solution | | 6 | | 6 | 6 | 6 | | 6 | |
| Antifouling agent | cuprous oxide | | 45 | 45 | 45 | 45 | 45 | 45 | 45 | 45 |
| | copper pyrithione | | 3 | 3 | 3 | 3 | 3 | 3 | 3 | 3 |
| Pigment | red iron oxide | | 2 | 2 | 2 | 2 | 2 | 2 | 2 | 2 |
| | talc | | 2 | 2 | 2 | 2 | 2 | 2 | 2 | 2 |
| | zinc oxide | | 4 | 4 | 4 | 4 | 4 | 4 | 4 | 4 |
| | titanium oxide | | 1 | 1 | 1 | 1 | 1 | 1 | 1 | 1 |
| Other additives | Disparlon A603-20X | | 3 | 3 | 3 | 3 | 3 | 3 | 3 | 3 |
| | tetraethoxysilane | | 0.5 | 0.5 | 0.5 | 0.5 | 0.5 | 0.5 | 0.5 | 0.5 |
| | tricresyl phosphate | | 2 | 2 | 2 | 2 | 2 | 2 | 2 | 2 |
| Solvent | xylene | | 6.5 | 3.5 | 3.5 | 5.5 | 5.5 | 5.5 | 3.5 | 3.5 |
| | 1-butanol | | | | | 1 | 1 | 1 | | |
| | butyl acetate | | | 3 | 3 | | | | 3 | 3 |
| Total | | | 100 | 100 | 100 | 100 | 100 | 100 | 100 | 100 |
| Test Example 1 Rotary Test | average coating film dissolution amount (µm/month) | initial to 6 months later | 5.0 | 4.7 | 7.5 | 4.2 | 7.2 | 5.1 | 2.5 | 4.2 |
| | | after 6 to 12 months | 2.5 | 2.5 | 7.5 | 1.3 | 6.8 | 4.2 | 1.7 | 20 |
| | | after 12 to 18 months | 5.0 | 4.5 | 100 | 4.5 | 6.8 | 5.8 | 1.7 | 4.7 |
| | | after 18 to 24 months | 5.0 | 7.5 | 6.7 | 3.3 | 6.7 | 5.1 | 2.5 | 3.0 |
| | | after 24 to 30 months | 6.7 | 6.2 | 6.7 | 3.8 | 6.7 | 5.6 | 4.2 | 40 |
| | | after 30 to 36 months | 4.2 | 3.8 | 11.7 | 2.8 | 8.3 | 5.0 | 2.5 | 3.0 |
| | coating film condition after 24 months | | AA | AA | AA | AA | AA | AA | AA | AA |
| | coating film condition after 36 months | | AA | B | AA | B | AA | B | AA | B |
| Test Example 2 Antifouling Test | after 12 months | | AA | AA | AA | AA | AA | AA | AA | AA |
| | after 24 months | | AA | AA | AA | AA | AA | A | A | A |
| | after 36 months | | A | A | A | A | A | A | B | A |

The details of the components in the table are as follows.

### <Antifouling Agent>

Cuprous oxide: product name "NC-301" (manufactured by Nissin Chemco Ltd.)
Copper pyrithione: product name "Copper Omadine" (manufactured by Lonza Group AG)

### <Release Modifier>

Gum rosin solution: solution produced in Production Example C1 was used.
Gum rosin zinc salt solution: solution produced in Production Example C2 was used.

### <Pigment>

Red iron oxide: product name "BENGARA KINGYOKU" (manufactured by Morishita Red iron oxide Kogyo Co., Ltd.)
Talc: product name "Talc MS" (manufactured by Nippon Talc Co., Ltd.)
Zinc oxide: product name "Zinc Oxide (Type II)" (manufactured by Seido Chemical Industry Co., Ltd.)
Titanium oxide: product name "FR-41" (manufactured by Furukawa Co., Ltd.)

### <Other Additives>

Disparlon A603-20X: amide thixotropic agent, product name "Disparlon A603-20X" (manufactured by Kusumoto Chemicals, Ltd.)
Tricresyl phosphate: (manufactured by Daihachi Chemical Industry Co., Ltd.)
Tetraethoxysilane: product name "Ethyl Silicate 28" (manufactured by Colcoat Co., Ltd.)

### 3. Test

All the coating compositions of Examples and Comparative Examples were placed in a sealed container within 1 hour after production, left to stand for 30 days in a thermostatic chamber set at 50°C (accelerated deterioration treatment) before use. The coating materials treated as described above were subjected to the following tests. The evaluation results are shown in Tables 6 to 7.

All Comparative Examples did not show good results in any of the rotary test and the antifouling test, compared to Examples.

### <Test Example 1 (Rotary Test)>

A water tank was provided with, in the center thereof, a rotary drum having a diameter of 515 mm and a height of 440 mm, which was configured to be rotatable by a motor. The tank was also provided with a cooling apparatus for keeping the seawater temperature constant, and an automatic pH controller for keeping the seawater pH constant.

Test plates were prepared in accordance with the following method.

First, an anti-corrosion coating material (an epoxy vinyl A/C) was applied onto a titanium plate (71 × 100 × 0.5 mm) such that the thickness after drying was about 100 µm, and dried to form an anti-corrosion coating film. Thereafter, each of the coating compositions obtained in Examples and Comparative Examples was applied thereon such that the dry film thickness was about 450 µm, and dried at 40°C for 3 days to prepare a test plate.

The test plate thus prepared was fixed to the rotary drum of the rotating apparatus of the above equipment so as to be in contact with seawater, and the rotary drum was rotated at a speed of 20 knots. During the test, the temperature and the pH of the seawater were maintained at 25°C and at 8.0 to 8.2, respectively, and the seawater was replaced every two weeks.

The initial film thickness and remaining film thickness were measured at the initial stage and every 6 months after the start of the test for each of the testing plates using a shape measurement laser microscope VK-X100 manufactured by Keyence Corporation, and the dissolved coating film thickness was calculated from the difference between the two values to obtain the coating film dissolution amount per month (µm/month), and the coating film dissolubility was evaluated in accordance with the following criteria.

Further, when measuring the remaining film thickness after 24 months and 36 months of the rotary test, the surface of each coating film was observed with naked eyes and a microscope to evaluate the surface condition of the coating film.

Evaluation of the coating film surface condition was made in accordance with the following criteria.
AA: No defects observed
A: Hairline cracks observed in less than 10% of the total surface area of the coating film
B: Hair cracks observed in 10% or more and less than 30% of the total surface area of the coating film
C: Hairline cracks observed in 30% or more of the total surface area of the coating film
D: Coating film defects such as large cracks, blisters, or peel-offs (only the surface or a part of the edge of the coating film peels off), delamination (the entire coating film peels off, and no test coating film remains) observed
F: After accelerated deterioration treatment, problems such as thickening and gelation in coating materials occurred such that the test of the subject was impossible.

### <Test Example 2 (Antifouling Test)>

Each of the coating compositions obtained in Examples and Comparative Examples was applied onto both sides of a PVC plate (100 × 200 × 2 mm) such that the thickness of the dry coating film was about 300 µm. The resulting coated product was dried at room temperature (25°C) for 3 days to prepare a test plate with a dry coating film having a thickness of about 300 µm. The test plate was immersed 1.5 m below sea level in Owase City, Mie Prefecture, Japan, and fouling of the test plate by adhered materials was observed after 12 months, 24 months, and 36 months.

Evaluation was made in accordance with the following criteria by visual observation of the surface condition of the coating films.
AA: No fouling organisms such as shellfish and algae adhered, and almost no slime
A: No fouling organisms such as shellfish and algae adhered, and slime thinly adhered (to the extent that the coating film surface was visible) but removable by lightly wiping with a brush
B: No fouling organisms such as shellfish and algae adhered, and slime adhered thickly to the extent that the coating film surface was not visible and not removable even by strong wiping with a brush
C: Fouling organisms such as shellfish and algae adhered
F: After accelerated deterioration treatment, problems such as thickening and gelation in coating materials occurred such that the test of the subject was impossible.

## Claims

1. An antifouling coating composition comprising:
a copolymer A; and
an antifouling agent D,
wherein the copolymer A is a copolymer of a monomer (a) represented by general formula (1) and an ethylenically unsaturated monomer (b) other than the monomer (a);
the monomer (a) comprises a compound represented by the general formula (1) in which n is 2 or more;
the monomer (b) comprises a monomer (b1); and
the monomer (b1) is capable of forming a homopolymer having a glass transition temperature (Tg) of -20°C or higher and has a common logarithm log P of a n-octanol/water partition coefficient P of 0.9 or less, 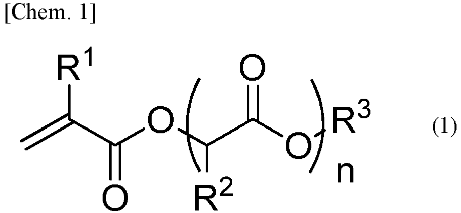
wherein R¹ represents hydrogen or a methyl group, R² represents hydrogen, a methyl group, or a phenyl group, R³ is an alkyl group having 1 to 8 carbon atoms optionally substituted with an alkoxy group having 1 to 8 carbon atoms or a phenyl group, or represents a phenyl group, and n represents an integer of 1 to 10.
